# EUROPÄISCHE PATENTSCHRIFT

(11) **EP 3 140 132 B1**
(45) Veröffentlichungstag und Bekanntmachung des Hinweises auf die Patenterteilung: **28.08.2019**
(21) Anmeldenummer: 15704308.4
(22) Anmeldetag: 13.02.2015
(51) Int. Cl.: B60C 9/20

(54) **FAHRZEUGLUFTREIFEN**
VEHICLE TIRES
PNEUMATIQUES DE VÉHICULES

(30) Priorität: 09.05.2014 DE 102014208728
(43) Veröffentlichungstag der Anmeldung: 15.03.2017
(73) Patentinhaber: Continental Reifen Deutschland GmbH, 30165 Hannover (DE)
(72) Erfinder: LACKO, Michal, 020 01 Puchov (SK); GEHLAUF, Matthias, 31319 Sehnde (DE); WACHMANN, Fabian, 30419 Hannover (DE)
(74) Vertreter: Finger, Karsten
(86) Internationale Anmeldenummer: PCT/EP2015/053056
(87) Internationale Veröffentlichungsnummer: WO 2015/169457

(56) Entgegenhaltungen:
- DE-A1-102010 000 471
- DE-A1-102010 016 550
- DE-A1-102010 016 569
- DE-A1-102011 001 228

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern und die in radialer Richtung R am weitesten außen angeordnete, vierte Gürtellage mit parallelen in Gummi eingebetteten Festigkeitsträgern ausgebildet ist, wobei in radialer Richtung zwischen der ersten Gürtellage und der vierten Gürtellage wenigstens eine zweite Gürtellage mit parallelen in Gummi eingebetteten Festigkeitsträgern, welche auf der ersten Gürtellage angeordnet ist, und eine dritte Gürtellage mit parallelen in Gummi eingebetteten Festigkeitsträgern, welche auf der zweiten Gürtellage angeordnet ist, ausgebildet ist.

### Derartige Fahrzeugluftreifen sind bekannt.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen eine beschränkte Umfangssteifigkeit auf. Die hierdurch ermöglichte Beweglichkeit der Gürtelränder kann sich negativ auf die Haltbarkeit des Reifens auswirken. Der Gürtel kann darüber hinaus im Betrieb radialen Expansionen unterliegen. Dieses Wachstum kann zu überhöhtem ungleichmäßigem Abrieb des Reifens führen.

Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte 0°-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Der Einfluss der 0°-Lage beschränkt sich jedoch im Wesentlichen auf die radial äußere Arbeitslage. Die innere Arbeitslage ist jedoch mit einer verbleibenden Beweglichkeit ausgebildet, mit weiterhin negativen Einflüssen auf Haltbarkeit und Abrieb.

Darüber hinaus ist gelegentlich - beispielsweise aus der WO2011/131383A1 - eine Ausbildung eines Nutzfahrzeugluftreifens mit einer Vier-Lagen-Gürtelanordnung vorgeschlagen worden mit einer radial inneren Sperrlage mit Stahlkorden, die einen Winkel von 50° zur Umfangsrichtung einschließen. Radial außerhalb der Sperrlage sind zwei Arbeitslagen ausgebildet. Eine 0°-Lage ist radial zwischen den beiden Arbeitslagen ausgebildet ist. Die beiden Arbeitslagen sind bei diesen Ausbildungen weiterhin im Kreuzverband ausgebildet und ihre Stahlkorde sind mit Winkeln von jeweils 20° zur Umfangsrichtung ausgerichtet. Derartige Ausbildungen ermöglichen eine hohe Umfangssteifigkeit und gegenüber einem herkömmlichen Nutzfahrzeugluftreifen eine verbesserte Haltbarkeit und ein verbessertes Abriebsbild. Dennoch beeinträchtigen die zwischen den Gürtellagenenden der Arbeitslagen auftretenden Scherkräften eine weitere Optimierung der Dauerhaltbarkeit.

Aus der DE 102010016569 A1 sowie aus der DE 102010016550 A1 ist jeweils ein Fahrzeugluftreifen gemäß den Merkmalen des Oberbegriffs von Anspruch 1 bekannt.

Der Erfindung liegt die Aufgabe zugrunde einen derartigen Fahrzeugluftreifen für Nutzfahrzeuge mit wenigstens vier Gürtellagen zu schaffen, bei dem in einfacher Weise unter Nutzung der Vorteile der Ausbildung eines Vierlagengürtels mit zwei Arbeitslagen, einer Nullgradlage und einer Sperrlage eine weitere Verbesserung der Dauerhaltbarkeit ermöglicht wird.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die von den vier Gürtellagen in radialer Richtung R am weitesten innen angeordnete, erste Gürtellage mit parallelen in Gummi eingebetteten Festigkeitsträgern und die in radialer Richtung R am weitesten außen angeordnete, vierte Gürtellage mit parallelen in Gummi eingebetteten Festigkeitsträgern ausgebildet ist, wobei in radialer Richtung zwischen der ersten Gürtellage und der vierten Gürtellage wenigstens eine zweite Gürtellage mit parallelen in Gummi eingebetteten Festigkeitsträgern, welche auf der ersten Gürtellage angeordnet ist, und eine dritte Gürtellage mit parallelen in Gummi eingebetteten Festigkeitsträgern, welche auf der zweiten Gürtellage angeordnet ist, ausgebildet ist, gemäß den Merkmalen von Anspruch 1 gelöst, bei dem die erste Gürtellage und die vierte Gürtellage Arbeitslagen sind, bei denen die Festigkeitsträger der ersten Gürtellage in ihrer Ausrichtung einen Winkel α zur Umfangsrichtung U mit 10°≤α≤45° und die Festigkeitsträger der vierten Gürtellage in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger der ersten Gürtellage eine entgegengesetzte axiale Neigungsrichtung zu den Festigkeitsträgern der vierten Gürtellage aufweisen, bei dem die zweite oder die dritte Gürtellage eine Gürtellage ist, deren Festigkeitsträger in ihrer Ausrichtung einen Winkel ε zur Umfangsrichtung U mit 40°≤ε≤75° einschließen, und bei dem die andere von den beiden Gürtellagen eine Gürtellage ist, deren Festigkeitsträger in ihrer Ausrichtung einen Winkel β zur Umfangsrichtung U mit 0°≤β≤5° einschließen, wobei radial innerhalb der radial inneren Arbeitslage zwischen Arbeitslage und Karkasse eine zusätzliche Gürtellage angeordnet ist mit parallelen in Gummi eingebetteten Festigkeitsträgern, die in ihrer Ausrichtung einen Winkel θ zur Umfangsrichtung U des Fahrzeugluftreifens mit 40°≤ θ ≤ 75° - insbesondere mit θ =50°- einschließen, und wobei insbesondere in Umfangsrichtung U des Fahrzeugreifens gesehen die Festigkeitsträger dieser zusätzlichen Gürtellage eine entgegengesetzte axiale Neigungsrichtung zu den Festigkeitsträgern der Gürtellage, die in ihrer Ausrichtung den Winkel ε zur Umfangsrichtung U einschließen, aufweisen.

Die Ausbildung ermöglicht die Beibehaltung der hinsichtlich guter Kraftübertragung in Umfangs- und Querrichtung und geringem Abrieb vorteilhafte Ausbildung mit zwei Arbeitslagen, einer 0°-Lage und einer Sperrlage. Die Zwischenpositionierung der beiden Lagen zwischen der ersten als Arbeitslage ausgebildeten Gürtellage und der vierten als Arbeitslage ausgebildeten Gürtellage vergrößert ohne zusätzliche Maßnahmen den Abstand der beiden Arbeitslagen zueinander. Die Bildung und Wirkung von Scherkräften zwischen den Gürtellagenenden der Arbeitslagen kann somit bereits reduziert werden, was sich positiv auf die Dauerhaltbarkeit auswirkt. Die zwischen den Arbeitslagen positionierte Nullgradlage behindert das Entstehen ungewünschter lateraler Deformation der Gürtelkanten. Die zusätzlich zwischenpositionierte Gürtellage mit Winkel ε ihrer Festigkeitsträger zur Umfangsrichtung U mit 40°≤ε≤75° sperrt bzw. blockiert zusätzlich weitere Deformation. Somit kann hochwirksam die laterale Deformation verhindert und Dauerhaltbarkeit erhöht werden. Durch die Ausbildung der zusätzlichen Gürtellage kann die Haltbarkeit der Karkasse durch Kompressionsvermeidung erhöht werden.

Besonders vorteilhaft ist die Ausbildung eines Fahrzeugluftreifens gemäß den Merkmalen von Anspruch 2, wobei die zweite Gürtellage diejenige Gürtellage ist, deren Festigkeitsträger in ihrer Ausrichtung einen Winkel ε zur Umfangsrichtung U mit 40°≤ε≤75° einschließen, und dass die dritte Gürtellage diejenige Gürtellage ist, deren Festigkeitsträger in ihrer Ausrichtung einen Winkel β zur Umfangsrichtung U mit 0°≤β≤5° einschließen. Hierdurch kann eine zusätzliche Vergleichmäßigung des Abriebs ermöglicht werden.

Besonders vorteilhaft ist die Ausbildung eines Fahrzeugluftreifens gemäß den Merkmalen von Anspruch 3, wobei radial außerhalb der dritten Gürtellage zwischen dritter Gürtellage und vierter Gürtellage eine weitere Gürtellage ausgebildet ist, deren Festigkeitsträger in ihrer Ausrichtung einen Winkel (ζ) zur Umfangsrichtung U mit 40°≤ ζ ≤75° einschließen, wobei in Umfangsrichtung U des Fahrzeugreifens gesehen die Festigkeitsträger der zweiten Gürtellage eine entgegengesetzte axiale Neigungsrichtung zu den Festigkeitsträgern der weiteren Gürtellage aufweisen. Hierdurch kann in einfacher Weise zusätzlich der "ply-steer"-Effekt bei Minimierung der zwischen den Arbeitslagen wirkenden Scherkräften verringert werden.

Besonders vorteilhaft ist die Ausbildung eines Fahrzeugluftreifens gemäß den Merkmalen von Anspruch 4, wobei die dritte Gürtellage diejenige Gürtellage ist, deren Festigkeitsträger in ihrer Ausrichtung einen Winkel ε zur Umfangsrichtung U mit 40°≤ε≤75° einschließen, und dass die zweite Gürtellage diejenige Gürtellage ist, deren Festigkeitsträger in ihrer Ausrichtung einen Winkel β zur Umfangsrichtung U mit 0°≤β≤5° einschließen. Hierdurch kann die Haltbarkeit des Gürtels und des Reifens weiter verbessert werden.

Besonders vorteilhaft zur Erzielung eines verbesserten Abriebbildes ist die Ausbildung eines Fahrzeugluftreifens gemäß den Merkmalen von Anspruch 5, wobei in Umfangsrichtung U gesehen die Festigkeitsträger der ersten Gürtellage und die Festigkeitsträger der Gürtellage, die in ihrer Ausrichtung den Winkel ε zur Umfangsrichtung U einschließen, die gleiche axiale Neigungsrichtung aufweisen. Hierdurch wird die Ausbildung eines guten Footprints des Reifens weiter begünstigt.

Besonders vorteilhaft zur Erzielung eines verbesserten Abriebbildes ist die Ausbildung eines Fahrzeugluftreifens gemäß den Merkmalen von Anspruch 6, wobei die erste Gürtellage in ihrer axialen Erstreckung im Fahrzeugluftreifen größer ausgebildet ist als alle anderen Gürtellagen des Gürtels. Hierdurch kann die Haltbarkeit des Gürtels und des Reifens weiter verbessert werden.

Besonders vorteilhaft zur Erzielung eines verbesserten Abriebbildes ist die Ausbildung eines Fahrzeugluftreifens gemäß den Merkmalen von Anspruch 7, wobei die Gürtellage, deren Festigkeitsträger in ihrer Ausrichtung mit einem Winkel β zur Umfangsrichtung U ausgerichtet sind, in ihrer axialen Erstreckung kleiner ausgebildet ist als alle anderen Gürtellagen des Gürtels. Hierdurch kann die Haltbarkeit des Gürtels und des Reifens weiter verbessert sowie ein vergleichmäßigter Abrieb ermöglicht werden.

Besonders vorteilhaft zur Erzielung eines verbesserten Abriebbildes ist die Ausbildung eines Fahrzeugluftreifens gemäß den Merkmalen von Anspruch 8, wobei radial außerhalb der radial äußeren Arbeitslage auf der äußeren Arbeitslage eine weitere zusätzliche Gürtellage angeordnet ist mit parallelen in Gummi eingebetteten Festigkeitsträgern, die in ihrer Ausrichtung einen Winkel δ zur Umfangsrichtung U des Fahrzeugluftreifens mit 40°≤δ≤75° - insbesondere mit δ =50°- einschließen, und wobei insbesondere in Umfangsrichtung U des Fahrzeugreifens gesehen die Festigkeitsträger dieser zusätzlichen Gürtellage eine entgegengesetzte axiale Neigungsrichtung zu den Festigkeitsträgern der Gürtellage, die in ihrer Ausrichtung den Winkel ε zur Umfangsrichtung U einschließen, aufweisen. Hierdurch kann der Schutz der Arbeitslagen vor Einschnitten einfach und zuverlässig erhöht werden. Durch die Ausbildung, bei der die Festigkeitsträger der zusätzlichen Gürtellage eine entgegengesetzte axiale Neigungsrichtung zu den Festigkeitsträgern der Gürtellage, die in ihrer Ausrichtung den Winkel ε zur Umfangsrichtung U einschließen, kann zusätzlich der "ply-steer"-Effekt weiter verbessert werden. Risswanderungen zur Karkasse kanneingeschränkt und die Haltbarkeit des Reifens verbessert werden.

Besonders vorteilhaft zur Erzielung eines verbesserten Abriebbildes ist die Ausbildung eines Fahrzeugluftreifens gemäß den Merkmalen von Anspruch 9, wobei die Festigkeitsträger der ersten Gürtellage und die Festigkeitsträger der vierten Gürtellage Stahlkorde sind. Hierdurch kann Haltbarkeit und Rollwiderstand begünstigt werden.

Besonders vorteilhaft zur Erzielung eines verbesserten Abriebbildes ist die Ausbildung eines Fahrzeugluftreifens gemäß den Merkmalen von Anspruch 10, wobei die Festigkeitsträger der beiden als Arbeitslagen ausgebildeten ersten und vierten Gürtellage im Reifen dehnbar ausgebildet sind mit einer Dehnung D von D ≥ 0,2% bei 10% der Bruchkraft. Hierdurch kann Haltbarkeit und Rollwiderstand begünstigt werden.

Besonders vorteilhaft zur Erzielung eines verbesserten Abriebbildes ist die Ausbildung eines Fahrzeugluftreifens gemäß den Merkmalen von Anspruch 11. Hierdurch kann durch Flexibilität des Gürtelpakets die Haltbarkeit des Reifens weiter begünstigt werden. Hierdurch kann Haltbarkeit und Rollwiderstand begünstigt werden.

Besonders vorteilhaft zur Erzielung eines verbesserten Abriebbildes ist die Ausbildung eines Fahrzeugluftreifens gemäß den Merkmalen von Anspruch 12, wobei die Festigkeitsträger der Gürtellage, die in ihrer Ausrichtung den Winkel β zur Umfangsrichtung U einschließen, Festigkeitsträger aus Stahl sind. Hierdurch wird eine hohe Umfangssteifigkeit und eine gute Haltbarkeit und gleichmäßiger Abrieb weiter begünstigt. Zusätzlich wird ein kontrolliertes Reifenwachstum begünstigt.

Besonders vorteilhaft zur Erzielung eines verbesserten Abriebbildes ist die Ausbildung eines Fahrzeugluftreifens gemäß den Merkmalen von Anspruch 13, wobei die Festigkeitsträger der Gürtellage, die in ihrer Ausrichtung den Winkel ε zur Umfangsrichtung U einschließen, Stahlkorde sind. Hierdurch kann Haltbarkeit und Rollwiderstand begünstigt werden.

Besonders vorteilhaft zur Erzielung eines verbesserten Abriebbildes ist die Ausbildung eines Fahrzeugluftreifens gemäß den Merkmalen von Anspruch 14, wobei die Festigkeitsträger der weiteren Gürtellage Stahlkorde sind. Hierdurch kann Haltbarkeit und Rollwiderstand begünstigt werden.

Die Erfindung wird im Folgenden an Hand der in den Fig.1 bis Fig.14 dargestellten Ausführungen eines Nutzfahrzeugluftreifens radialer Bauart erläutert. Darin zeigen die Figuren 1 - 5 sowie 9 - 14 Ausführungen die nicht Teil der Erfindung sind, wobei
- Fig.1: die Querschnittdarstellung eines Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind,
- Fig.3: eine Querschnittdarstellung eines Fahrzeugluftreifens analog zur Darstellung von Fig.1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind,
- Fig.5: eine Querschnittdarstellung eines Fahrzeugluftreifens analog zur Darstellung von Fig.1 mit alternativer Gürtelausbildung,
- Fig.6: Draufsicht auf den Gürtel von Fig.5 gemäß Schnitt VI - VI von Fig.5, bei der zur Vereinfachung alle anderen Bauteile des Reifens nicht dargestellt sind,
- Fig.7: eine Querschnittdarstellung eines Fahrzeugluftreifens analog zur Darstellung von Fig.1 mit alternativer Gürtelausbildung,
- Fig.8: Draufsicht auf den Gürtel von Fig.7 gemäß Schnitt VIII - VIII von Fig.7, bei der zur Vereinfachung alle anderen Bauteile des Reifens nicht dargestellt sind,
- Fig.9: eine Querschnittdarstellung eines Fahrzeugluftreifens analog zur Darstellung von Fig.1 mit alternativer Gürtelausbildung,
- Fig.10: Draufsicht auf den Gürtel von Fig.9 gemäß Schnitt X - X von Fig.9, bei der zur Vereinfachung alle anderen Bauteile des Reifens nicht dargestellt sind,
- Fig.11: eine Querschnittdarstellung eines Fahrzeugluftreifens analog zur Darstellung von Fig.1 mit alternativer Gürtelausbildung,
- Fig.12: Draufsicht auf den Gürtel von Fig.11 gemäß Schnitt XII - XII von Fig.1 1, bei der zur Vereinfachung alle anderen Bauteile des Reifens nicht dargestellt sind,
- Fig.13: eine Querschnittdarstellung eines Fahrzeugluftreifens analog zur Darstellung von Fig.1 mit alternativer Gürtelausbildung und
- Fig.14: Draufsicht auf den Gürtel von Fig.13 gemäß Schnitt X IV -X IV von Fig.13, bei der zur Vereinfachung alle anderen Bauteile des Reifens nicht dargestellt sind,

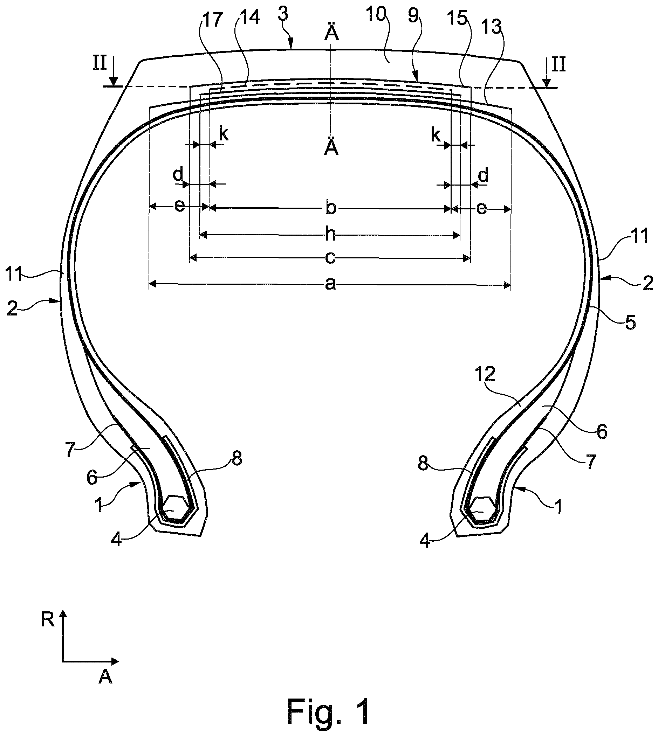

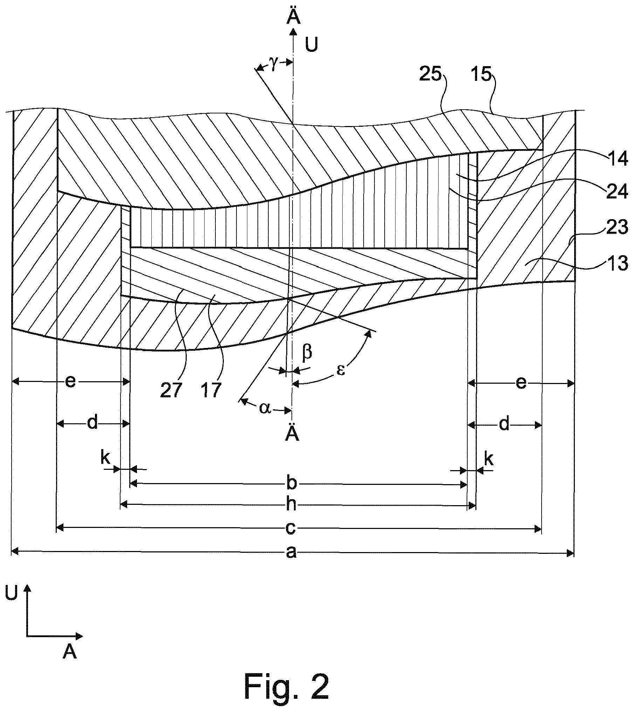

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Eingetragen ist auch die Äquatorebene Ä-Ä. Die Seitenwände 2 sind an ihrem in radialer Richtung R nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse 5 ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 7. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus vier in radialer Richtung R von innen nach außen übereinander und aufeinanderliegend angeordneten Gürtellagen 13,17, 14 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die in radialer Richtung R am weitesten innen angeordnete Gürtellage 13 des Gürtels 9 bildet die erste Gürtellage 13. Die in radialer Richtung R außerhalb der ersten Gürtellage 13 auf der ersten Gürtellage 13 angeordnete Gürtellage 17 bildet die zweite Gürtellage. Die in radialer Richtung R außerhalb der zweiten Gürtellage auf der zweiten Gürtellage angeordnete Gürtellage 14 bildet die dritte Gürtellage. Die in radialer Richtung R außerhalb der dritten Gürtellage auf der dritten Gürtellage angeordnete Gürtellage 15 bildet die vierte Gürtellage 15.

Die Gürtellage 13 und die Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet.

Die in radialer Richtung R zwischen erster Gürtellage (untere Arbeitslage) 13 und vierter Gürtellage (obere Arbeitslage) 15 ausgebildete Gürtellage 14 erstreckt sich in Umfangsrichtung U über den gesamten Umfang des Fahrzeugluftreifens und in axialer Richtung A von linker Reifenschulter zur rechten Reifenschulter und ist als Nullgrad-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind. In dem in Fig.1 und Fig.2 dargestellten Ausführungsbeispiel bildet die Gürtellage 14 die zweite Gürtellage, welche in radialer Richtung R zwischen unterer Arbeitslage 13 und dritter Gürtellage angeordnet ist.

Die in radialer Richtung R zwischen erster Gürtellage (untere Arbeitslage) 13 und vierter Gürtellage (obere Arbeitslage) 15 ausgebildete Gürtellage 17 erstreckt sich in Umfangsrichtung U über den gesamten Umfang des Fahrzeugluftreifens und in axialer Richtung A des Fahrzeugluftreifens von linker Reifenschulter bis zur rechten Reifenschulter. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 40° ≤ ε ≤ 75°, beispielsweise mit ε = 50°. In dem in Fig.1 und Fig.2 dargestellten Ausführungsbeispiel bildet die Gürtellage 17 die dritte Gürtellage, welche in radialer Richtung R zwischen unterer zweiter Gürtellage und oberer Arbeitslage 15 angeordnet ist.

Die Festigkeitsträger 27 der Gürtellage 17 sind - wie in Fig.2 dargestellt - in einem Ausführungsbeispiel mit einer längs der Erstreckung in Umfangsrichtung U des Reifens gesehen gleichen axialen Neigungsrichtung wie die Festigkeitsträger 23 der unteren Arbeitslage 13 und somit mit einer entgegengesetzten axialen Neigungsrichtung wie die Festigkeitsträger 25 der oberen Arbeitslage 15 ausgerichtet.

Alle vier Gürtellagen 13,14, 15 und 17 erstrecken sich zu beiden axialen Seiten jeweils bis in eine Position in der jeweiligen Reifenschulter. Die Gürtellage 14 ist zumindest über einen Teil ihrer axialen Erstreckung in direktem Berührkontakt zu der direkt benachbarten oberen Arbeitslage 15. Die Gürtellage 17 ist zumindest über einen Teil ihrer axialen Erstreckung in direktem Berührkontakt zu der unmittelbar benachbarten unteren Arbeitslage 13.

Die Gürtellage (0°-Lage) 14 erstreckt sich in axialer Richtung A über eine axiale Breite b, die Gürtellage 17 erstreckt sich in axialer Richtung A über eine axiale Breite h, die erste Gürtellage (untere Arbeitslage) 13 erstreckt sich in axialer Richtung A über eine axiale Breite a und die vierte Gürtellage (obere Arbeitslage) 15 erstreckt sich in axialer Richtung A über eine axiale Breite c im Reifen mit a > c >h ≥ b. Dabei erstreckt sich zu beiden axialen Seiten der Gürtellage 14 die erste Gürtellage 13 um eine axiale Erstreckungslänge e über die axiale Position des jeweiligen Gürtelrandes der Gürtellage 14 hinaus. Ebenso erstreckt sich die vierte Gürtellage 15 in beide axiale Richtungen jeweils um eine axiale Erstreckungslänge d über die axiale Position des jeweiligen Gürtelrandes der Gürtellage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet.

Die Gürtellage 17 erstreckt sich längs der gesamten axiale Erstreckung der Gürtellage 14 in unmittelbarem Berührkontakt zur Gürtellage 14 und endet in axialer Richtung A mit ihren beiden Gürtellagenrändern jeweils in einer axialen Position zwischen der axialen Position des nächstliegenden Gürtellagenrandes der Gürtellage 14 und der axialen Position des nächstliegenden Gürtellagenrandes der radial äußeren Arbeitslage 15 im axialen Abstand k vom Gürtellagenrand der Gürtellage 14 mit k < d < e und mit k≥ 0 mm.

Im dargestellten Ausführungsbeispiel ist h, b, c und a mit b < h < c < a und k> 0 mm gewählt.

Die Festigkeitsträger 27 sind Stahlkorde bekannter Art, beispielsweise des Typs "1+5", des Typs "3+6", des Typs "3+8" oder des Typs "3+9".

Die Festigkeitsträger 23 und 25 der beiden Arbeitslagen 13 und 15 sind dehnbare Stahlkorde bekannter Art, die bei Belastung auf Zug eine Bruchkraft F von F>2500N und bei 10% der Bruchkraft eine Dehnung D von D≥0,2% - beispielsweise mit 0,28% ≤ D ≤ 0,32% -aufweisen. Die Dehnung D der Festigkeitsträger ist dabei diejenige Dehnung, die beim vulkanisierten Reifen an dem von der Lage extrahierten Festigkeitsträger bestimmt wird. Die Messung der Dehnung erfolgt an Festigkeitsträger, die mit ihrer vollen Länge dem fertig vulkanisierten Reifen entnommen sind. Der Festigkeitsträger wird zur Messung soweit von Gummiresten befreit, dass der Festigkeitsträger mit der am Festigkeitsträger verbleibender Gummimenge keinen Durchmesser aufweist, der größer ist als der 1,5-fache maximale Außendurchmesser des ungummierten Festigkeitsträgers. Die Bestimmung der Dehnung erfolgt gemäß der ASTM D 2969 - 04.

Die Festigkeitsträger 23 und 25 sind beispielsweise Stahlkorde des Typs "3+8x0,35HT" mit einer Bruchkraft F, welche ca. 3000N beträgt, und mit einer Dehnung D von D>0,2% bei 10% der Bruchkraft.

Die Festigkeitsträger 24 sind in einer Ausführung Stahlkorde bekannter Art. In einer anderen Ausführung sind die Festigkeitsträger 24 Stahlkorde, die bei 10% der Bruchkraft eine Dehnung D mit D ≥ 0,2% - beispielsweise mit D = 0,5% - aufweisen. In einer Ausführung sind die Festigkeitsträger 24 Stahlkorde, die bei 10% der Bruchkraft eine Dehnung D mit D ≥ 1% - beispielsweise mit D ≥ 1,3% - aufweisen.

Die Festigkeitsträger 24 sind beispielsweise Stahlkorde des Typs "3x7 HEHT".

In einem Ausführungsbeispiel ist β = 3°, α = 18°, γ = 18°, ε = 50°, d = 11 mm, k=8mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

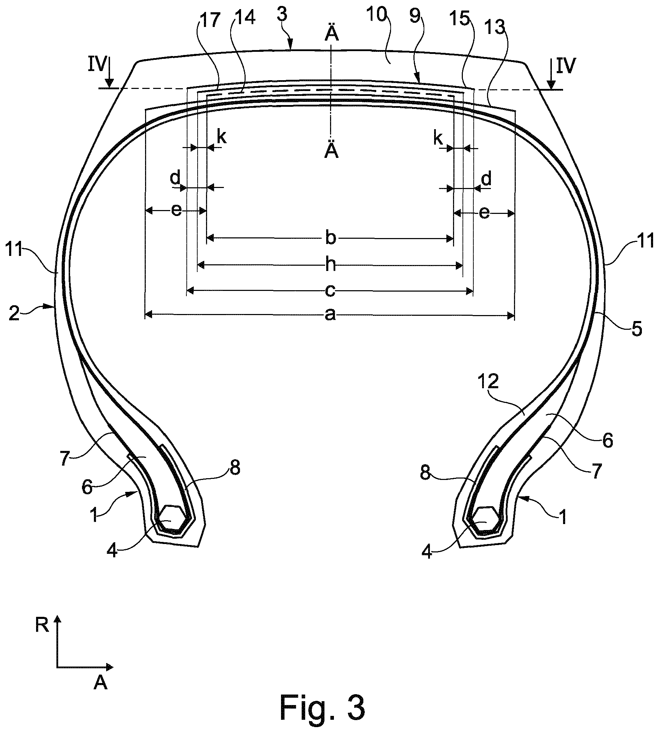

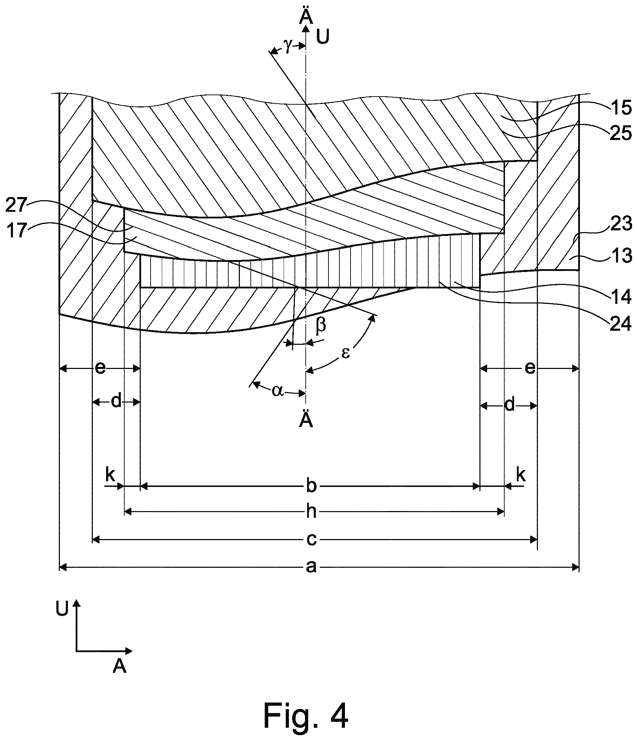

Fig.3 und Fig.4 zeigen eine weitere alternative Ausführung, bei der der Gürtel 9 analog zu dem in Fig.1 und Fig.2 gezeigten und hierzu beschriebenen Gürtel ausgebildet ist. Lediglich die Positionen der Gürtellage 14 und 17 innerhalb des Gürtels 9 sind gegenüber der in den Figuren 1 und 2 dargestellten Ausbildung vertauscht. Die Gürtellage 14 ist bei dieser Ausbildung die zweite Gürtellage, welche direkt auf der unteren Arbeitslage 13 in Berührkontakt zur unteren Arbeitslage 13 positioniert ist. Die Gürtellage 17 bildet die dritte Gürtellage und ist auf der Gürtellage 14 zwischen Gürtellage 14 und oberer Arbeitslage 15 in Berührkontakt zur Gürtellage 14 und zur oberen Arbeitslage 15 positioniert ausgebildet.

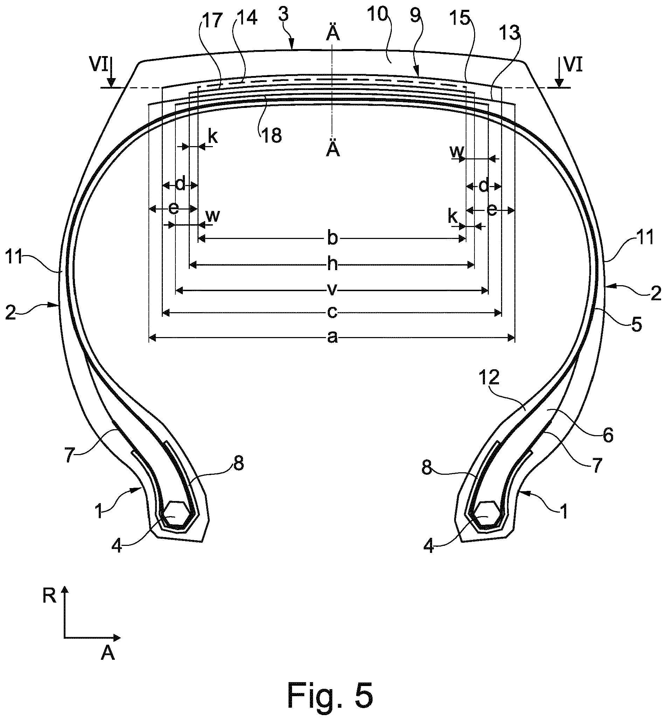

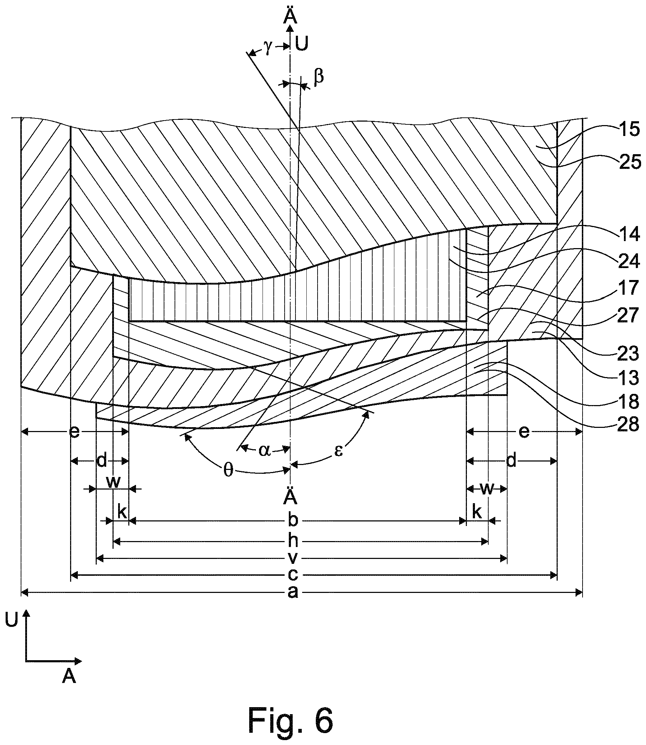

Fig.5 und Fig.6 zeigen eine erfindungsgemäße Ausführung eines Fahrzeugluftreifens von Fig.1 und Fig.2. Der Gürtel 9 ist - wie in Fig.1 und Fig.2 dargestellt und hierzu beschrieben - mit der unteren Arbeitslage 13, der oberen Arbeitslage 15, mit der die zweite Gürtellage bildenden Gürtellage 17 und mit der die dritte Gürtellage bildenden Gürtellage 14 ausgebildet. Der Gürtel 9 ist zusätzlich zu den in den Fig.1 und Fig.2 dargestellten Gürtellagen 13,17, 14 und 15 auf der radialen Innenseite der inneren Arbeitslage 13 - zwischen innerer Arbeitslage 13 und Karkasse 5 - mit einer zusätzlichen Gürtellage 18 ausgebildet, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 18 ist aus einer Lage von in Gummi eingebetteten fadenförmigen parallelen Festigkeitsträgern 28 ausgebildet, welche sich über die gesamte axiale Breite v der Gürtellage 18 im Wesentlichen geradlinig erstrecken und einen Neigungswinkel θ zur Umfangsrichtung U einschließen mit 40°≤ θ ≤75°, beispielsweise mit θ =50°. Die Gürtellage 18 erstreckt sich über ihre gesamte axiale Erstreckung in unmittelbarem Berührkontakt zur Arbeitslage 13 und endet in axialer Richtung A mit ihren beiden Gürtellagenrändern jeweils in einer axialen Position zwischen der axialen Position des nächstliegenden Gürtellagenrandes der Gürtellage 14 und der axialen Position des nächstliegenden Gürtellagenrandes der vierten Gürtellage (radial äußeren Arbeitslage) 15 im axialen Abstand w vom Gürtellagenrand der Gürtellage 14 mit w < e. Die Breite v ist das Maß der axialen Erstreckung der Gürtellage 18 mit b < v und mit v < a. Im dargestellten Ausführungsbeispiel ist b < v < c < a gewählt. In einem weiteren - in den Figuren 5 und 6 dargestellten - Ausführungsbeispiel ist zusätzlich h< v und k< w gewählt ausgebildet.

Die Festigkeitsträger 28 der Gürtellage 18 sind - wie in Fig.4 dargestellt - mit einer längs der Erstreckung in Umfangsrichtung U des Reifens gesehen entgegengesetzten axialen Neigungsrichtung wie die Festigkeitsträger 27 der Gürtellage 17 ausgerichtet.

Die Festigkeitsträger 28 sind Stahlkorde bekannter Art, beispielsweise des Typs "1+5", des Typs "3+6", des Typs "3+8" oder des Typs "3+9".

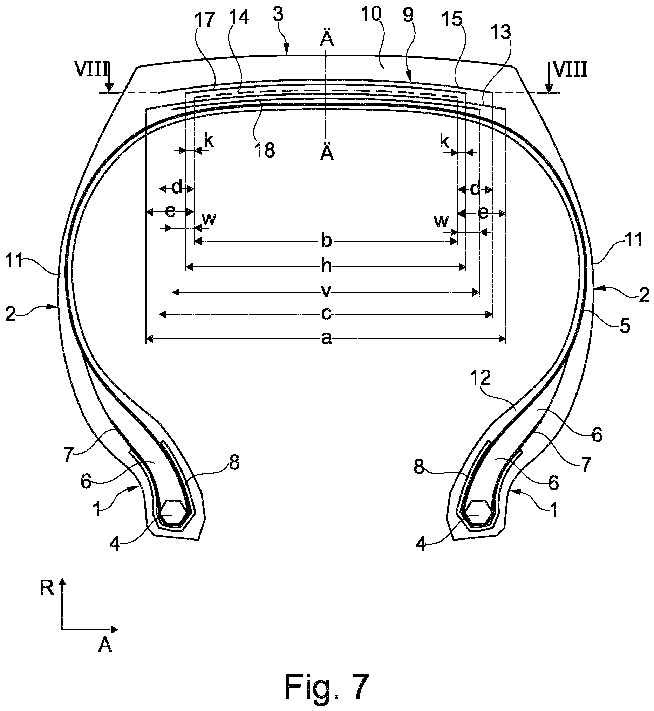

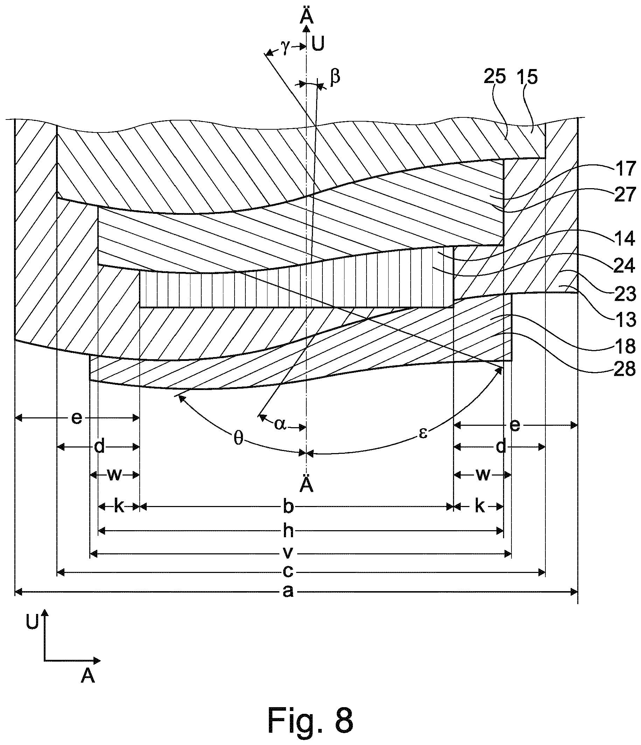

Fig.7 und Fig.8 zeigen ein weiteres erfindungsgemäßes Asuführungsbeispiel bei dem der Gürtel 9 analog zu dem in Fig.5 und Fig.6 gezeigten und hierzu beschriebenen Gürtel ausgebildet ist. Lediglich die Positionen der Gürtellage 14 und 17 innerhalb des Gürtels 9 sind gegenüber der in den Figuren 5 und 6 dargestellten Ausbildung vertauscht. Die Gürtellage 14 ist bei dieser Ausbildung die zweite Gürtellage, welche direkt auf der unteren Arbeitslage 13 in Berührkontakt zur unteren Arbeitslage 13 positioniert ist. Die Gürtellage 17 bildet die dritte Gürtellage und ist auf der Gürtellage 14 zwischen Gürtellage 14 und oberer Arbeitslage 15 in Berührkontakt zur Gürtellage 14 und zur oberen Arbeitslage 15 positioniert ausgebildet.

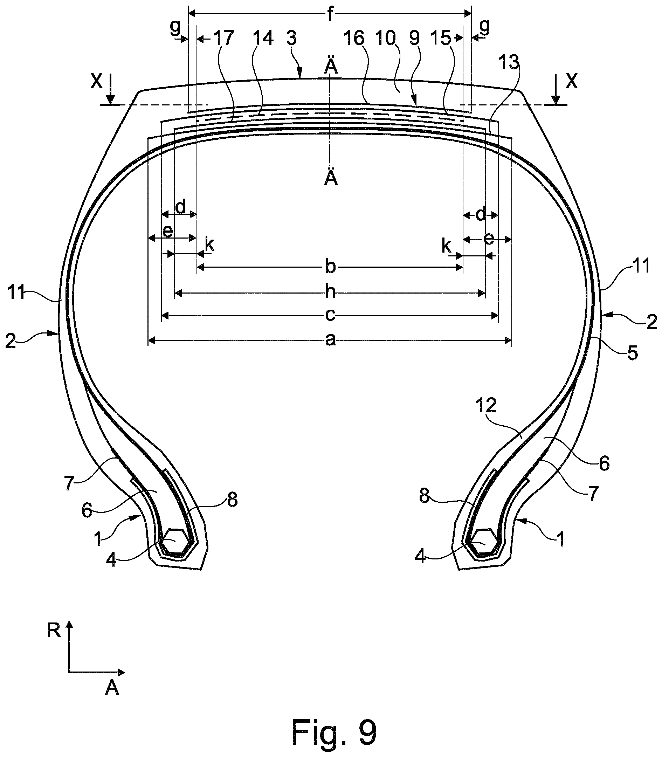

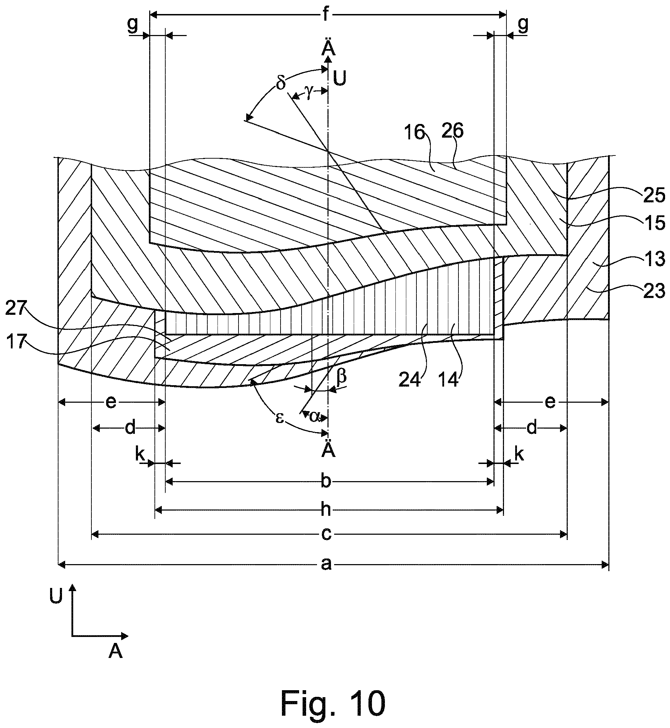

Fig.9 und Fig.10 zeigen eine weitere Ausführung, bei der der Gürtel 9 zusätzlich zu den in den Fig.1 und Fig.2 dargestellten Gürtellagen 17,13, 14 und 15 auf der radialen Außenseite der äußeren Arbeitslage 15 mit einer weiteren zusätzlichen Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 40°≤δ≤75°, beispielsweise mit δ =50°. Die Gürtellage 16 erstreckt sich über ihre gesamte axiale Erstreckung in unmittelbarem Berührkontakt zur Arbeitslage 15 und endet in axialer Richtung A mit ihren beiden Gürtellagenrändern jeweils in einer axialen Position zwischen der axialen Position des nächstliegenden Gürtellagenrandes der Gürtellage 14 und der axialen Position des nächstliegenden Gürtellagenrandes der vierten Gürtellage (radial äußeren Arbeitslage) 15 im axialen Abstand g vom Gürtellagenrand der Gürtellage 14 mit g < d. Die Breite f ist das Maß der axialen Erstreckung der fünften Gürtellage 16 mit b < f und mit f < a. Im dargestellten Ausführungsbeispiel ist b < f < c < a gewählt.

In einem weiteren - in Figur 9 dargestellten - Ausführungsbeispiel ist zusätzlich f< h und g < k gewählt ausgebildet. In einem weiteren - in Figur 10 dargestellten - Ausführungsbeispiel ist zusätzlich h< f und k< g gewählt ausgebildet.

Die Festigkeitsträger 26 der Gürtellage 16 sind - wie in Fig. 10 dargestellt - mit einer längs der Erstreckung in Umfangsrichtung U des Reifens gesehen entgegengesetzten axialen Neigungsrichtung wie die Festigkeitsträger 27 der Gürtellage 17 ausgerichtet.

Die Festigkeitsträger 26 sind Stahlkorde bekannter Art, beispielsweise des Typs "1+5", des Typs "3+6", des Typs "3+8" oder des Typs "3+9".

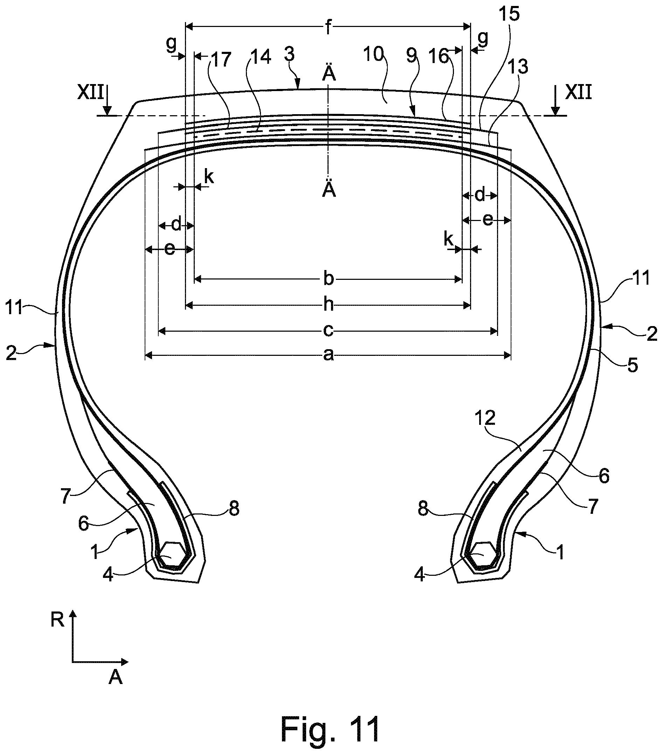

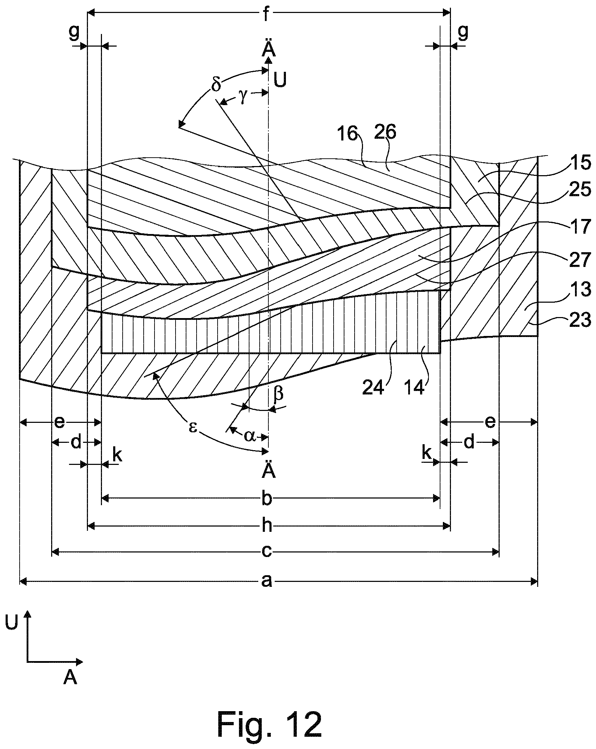

Fig.11 und Fig.12 zeigen eine weitere alternative Ausführung, bei der der Gürtel 9 analog zu dem in Fig.9 und Fig.10 gezeigten und hierzu beschriebenen Gürtel ausgebildet ist. Lediglich die Positionen der Gürtellage 14 und 17 innerhalb des Gürtels 9 sind gegenüber der in den Figuren 11 und 12 dargestellten Ausbildung vertauscht. Die Gürtellage 14 ist bei dieser Ausbildung die zweite Gürtellage, welche direkt auf der unteren Arbeitslage 13 in Berührkontakt zur unteren Arbeitslage 13 positioniert ist. Die Gürtellage 17 bildet die dritte Gürtellage und ist auf der Gürtellage 14 zwischen Gürtellage 14 und oberer Arbeitslage 15 in Berührkontakt zur Gürtellage 14 und zur oberen Arbeitslage 15 positioniert ausgebildet.

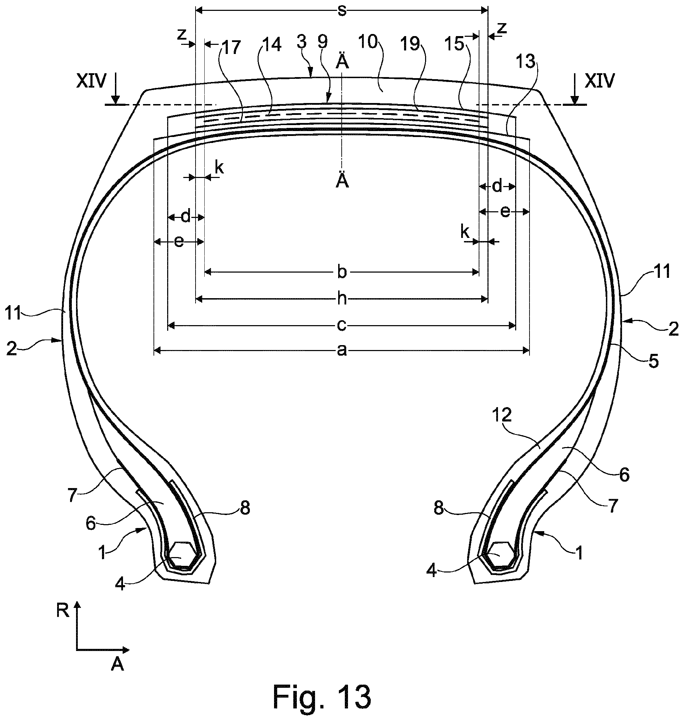

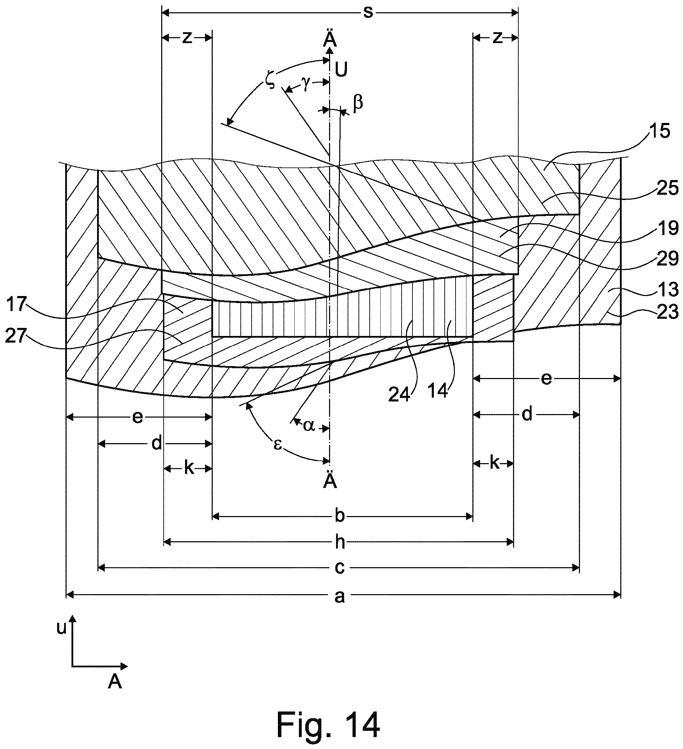

Fig.13 und Fig.14 zeigen eine weitere alternative Ausführung, bei der der Gürtel 9 zusätzlich zu den in den Fig.1 und Fig.2 dargestellten Gürtellagen 13,17, 14 und 15 auf der radialen Außenseite Gürtellage 14 zwischen Gürtellage der Gürtellage 14 und der äußeren Arbeitslage 15 mit einer zusätzlichen Gürtellage 19 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 19 ist aus einer Lage von in Gummi eingebetteten fadenförmigen parallelen Festigkeitsträgern 29 ausgebildet, welche sich über die gesamte axiale Breite s der Gürtellage 19 im Wesentlichen geradlinig erstrecken und einen Neigungswinkel ζ zur Umfangsrichtung U einschließen mit 40°≤ζ≤75°, beispielsweise mit ζ =50°. Die Gürtellage 19 erstreckt sich über ihre gesamte axiale Erstreckung in unmittelbarem Berührkontakt zur äußeren Arbeitslage 15 und endet in axialer Richtung A mit ihren beiden Gürtellagenrändern jeweils in einer axialen Position zwischen der axialen Position des nächstliegenden Gürtellagenrandes der Gürtellage 14 und der axialen Position des nächstliegenden Gürtellagenrandes der vierten Gürtellage (radial äußeren Arbeitslage) 15 im axialen Abstand z vom Gürtellagenrand der Gürtellage 14 mit z < d. Die Breite s ist das Maß der axialen Erstreckung der Gürtellage 19 mit b < s und mit s < c. Im dargestellten Ausführungsbeispiel ist b < s < c < a gewählt.

In einem weiteren - in den Figuren 13 und 14 dargestellten - Ausführungsbeispiel ist zusätzlich h≤s und k ≤z gewählt ausgebildet.

Die Festigkeitsträger 29 der Gürtellage 19 sind - wie in Fig.14 dargestellt - mit einer längs der Erstreckung in Umfangsrichtung U des Reifens gesehen entgegengesetzten axialen Neigungsrichtung wie die Festigkeitsträger 27 der Gürtellage 17 ausgerichtet.

Die Festigkeitsträger 29 sind Stahlkorde bekannter Art, beispielsweise des Typs "1+5", des Typs "3+6", des Typs "3+8" oder des Typs "3+9".

In den oben im Zusammenhang mit den Figuren genannten Ausführungsbeispielen sind die Festigkeitsträger 27, die Festigkeitsträger 26, die Festigkeitsträger 28 und die Festigkeitsträger 29 Stahlkorde. In anderer, nicht dargestellter Ausführung sind die Festigkeitsträger 26 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind. In anderer, nicht dargestellter Ausführung sind die Festigkeitsträger 27 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind. In anderer, nicht dargestellter Ausführung sind die Festigkeitsträger 28 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind. In anderer, nicht dargestellter Ausführung sind die Festigkeitsträger 29 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

In anderer, nicht dargestellter Ausführung sind auch die Festigkeitsträger 23 und/oder die Festigkeitsträger 24 und/oder Festigkeitsträger 25 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

Die Winkel α,β,γ,δ,ε,ζ und θ der Festigkeitsträger 13,14,15,16,17,19 bzw. 18 bilden jeweils den in der Position der Äquatorebene gemessenen Neigungswinkel.

### Bezugszeichenliste

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 18: Gürtellage
- 19: Gürtellage
- 23: Festigkeitsträger
- 24: Festigkeitsträger
- 25: Festigkeitsträger
- 26: Festigkeitsträger
- 27: Festigkeitsträger
- 28: Festigkeitsträger
- 29: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens vier von radial innen nach radial außen auf einander liegend angeordneten Gürtellagen (17,14,13,15) ausgebildet ist, wobei die von den vier Gürtellagen (17,14,13,15) in radialer Richtung R am weitesten innen angeordnete, erste Gürtellage (13) mit parallelen in Gummi eingebetteten Festigkeitsträgern (23) und die in radialer Richtung R am weitesten außen angeordnete, vierte Gürtellage (15) mit parallelen in Gummi eingebetteten Festigkeitsträgern (25) ausgebildet ist, wobei in radialer Richtung zwischen der ersten Gürtellage (13) und der vierten Gürtellage (15) wenigstens eine zweite Gürtellage (14,17) mit parallelen in Gummi eingebetteten Festigkeitsträgern (24,27), welche auf der ersten Gürtellage (13) angeordnet ist, und eine dritte Gürtellage (17,14) mit parallelen in Gummi eingebetteten Festigkeitsträgern (27,24), welche auf der zweiten Gürtellage (14,17) angeordnet ist, ausgebildet ist, wobei die erste Gürtellage (13) und die vierte Gürtellage (15) Arbeitslagen sind, bei denen die Festigkeitsträger (23) der ersten Gürtellage (13) in ihrer Ausrichtung einen Winkel α zur Umfangsrichtung U mit 10°≤α≤45° und die Festigkeitsträger (25) der vierten Gürtellage (15) in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger (23) der ersten Gürtellage (13) eine entgegengesetzte axiale Neigungsrichtung zu den Festigkeitsträgern (25) der vierten Gürtellage (15) aufweisen, wobei die zweite oder die dritte Gürtellage eine Gürtellage (17) ist, deren Festigkeitsträger (27) in ihrer Ausrichtung einen Winkel ε zur Umfangsrichtung U mit 40°≤ε≤75° einschließen, und wobei die andere von den beiden Gürtellagen eine Gürtellage (14) ist, deren Festigkeitsträger (24) in ihrer Ausrichtung einen Winkel β zur Umfangsrichtung U mit 0°≤β≤5° einschließen,
**dadurch gekennzeichnet,**
**dass** radial innerhalb der radial inneren Arbeitslage (13) zwischen Arbeitslage (13) und Karkasse (5) eine zusätzliche Gürtellage (18) angeordnet ist mit parallelen in Gummi eingebetteten Festigkeitsträgern (28), die in ihrer Ausrichtung einen Winkel θ zur Umfangsrichtung U des Fahrzeugluftreifens mit 40°≤ θ ≤75° - insbesondere mit θ =50°- einschließen, und wobei insbesondere in Umfangsrichtung U des Fahrzeugreifens gesehen die Festigkeitsträger (28) dieser zusätzlichen Gürtellage (18) eine entgegengesetzte axiale Neigungsrichtung zu den Festigkeitsträgern (27) der Gürtellage (17), die in ihrer Ausrichtung den Winkel ε zur Umfangsrichtung U einschließen, aufweisen.

2. Fahrzeugluftreifen gemäß den Merkmalen von Anspruch 1 oder 2,
wobei die zweite Gürtellage diejenige Gürtellage (17) ist, deren Festigkeitsträger (27) in ihrer Ausrichtung einen Winkel ε zur Umfangsrichtung U mit 40°≤ε≤75° einschließen, und dass die dritte Gürtellage diejenige Gürtellage (14) ist, deren Festigkeitsträger (24) in ihrer Ausrichtung einen Winkel β zur Umfangsrichtung U mit 0°≤β≤5° einschließen.

3. Fahrzeugluftreifen gemäß den Merkmalen von Anspruch 2,
wobei radial außerhalb der dritten Gürtellage (14) zwischen dritter Gürtellage und vierter Gürtellage (15) eine weitere Gürtellage (19) ausgebildet ist, deren Festigkeitsträger (29) in ihrer Ausrichtung einen Winkel (ζ) zur Umfangsrichtung U mit 40°≤ ζ ≤75° einschließen, wobei in Umfangsrichtung U des Fahrzeugreifens gesehen die Festigkeitsträger (27) der zweiten Gürtellage (17) eine entgegengesetzte axiale Neigungsrichtung zu den Festigkeitsträgern (29) der weiteren Gürtellage (19) aufweisen.

4. Fahrzeugluftreifen gemäß den Merkmalen von Anspruch 1,
wobei die dritte Gürtellage diejenige Gürtellage (17) ist, deren Festigkeitsträger (27) in ihrer Ausrichtung einen Winkel ε zur Umfangsrichtung U mit 40°≤ε≤75° einschließen, und dass die zweite Gürtellage diejenige Gürtellage (14) ist, deren Festigkeitsträger (24) in ihrer Ausrichtung einen Winkel β zur Umfangsrichtung U mit 0°≤β≤5° einschließen.

5. Fahrzeugluftreifen gemäß den Merkmalen von Anspruch 1,
wobei in Umfangsrichtung U gesehen die Festigkeitsträger (23) der ersten Gürtellage (13) und die Festigkeitsträger (27) der Gürtellage (17), die in ihrer Ausrichtung den Winkel ε zur Umfangsrichtung U einschließen, die gleiche axiale Neigungsrichtung aufweisen.

6. Fahrzeugluftreifen gemäß den Merkmalen von Anspruch 1,
wobei die erste Gürtellage (13) in ihrer axialen Erstreckung im Fahrzeugluftreifen größer ausgebildet ist als alle anderen Gürtellagen (14,15,17) des Gürtels.

7. Fahrzeugluftreifen gemäß den Merkmalen von Anspruch 1,
wobei die Gürtellage (14), deren Festigkeitsträger (24) in ihrer Ausrichtung mit einem Winkel β zur Umfangsrichtung U ausgerichtet sind, in ihrer axialen Erstreckung kleiner ausgebildet ist als alle anderen Gürtellagen (13,15,17) des Gürtels.

8. Fahrzeugluftreifen gemäß den Merkmalen von einem der vorangegangenen Ansprüche,
wobei radial außerhalb der radial äußeren Arbeitslage (15) auf der äußeren Arbeitslage (15) eine weitere zusätzliche Gürtellage (16) angeordnet ist mit parallelen in Gummi eingebetteten Festigkeitsträgern (26), die in ihrer Ausrichtung einen Winkel δ zur Umfangsrichtung U des Fahrzeugluftreifens mit 40°≤δ≤75° - insbesondere mit δ =50°- einschließen, und wobei insbesondere in Umfangsrichtung U des Fahrzeugreifens gesehen die Festigkeitsträger (26) dieser zusätzlichen Gürtellage (16) eine entgegengesetzte axiale Neigungsrichtung zu den Festigkeitsträgern (27) der Gürtellage (17), die in ihrer Ausrichtung den Winkel ε zur Umfangsrichtung U einschließen, aufweisen.

9. Fahrzeugluftreifen gemäß den Merkmalen von einem oder mehreren der vorangegangenen Ansprüche,
wobei die Festigkeitsträger (23) der ersten Gürtellage (13) und die Festigkeitsträger (25) der vierten Gürtellage (15) Stahlkorde sind.

10. Fahrzeugluftreifen gemäß den Merkmalen von einem oder mehreren der vorangegangenen Ansprüche,
wobei die Festigkeitsträger (23,25) der beiden als Arbeitslagen ausgebildeten ersten und vierten Gürtellage (13,15) im Reifen dehnbar ausgebildet sind mit einer Dehnung D von D ≥ 0,2% bei 10% der Bruchkraft.

11. Fahrzeugluftreifen gemäß den Merkmalen von einem oder mehreren der vorangegangenen Ansprüche,
wobei die Festigkeitsträger (24) der Gürtellage (14), die in ihrer Ausrichtung den Winkel β zur Umfangsrichtung U einschließen, Festigkeitsträger aus Stahl sind.

12. Fahrzeugluftreifen gemäß den Merkmalen von Anspruch einem oder mehreren der vorangegangenen Ansprüche,
wobei die Festigkeitsträger (24) der Gürtellage (14)), die in ihrer Ausrichtung deen Winkel β zur Umfangsrichtung U einschließen, Stahlkorde sind, die bei 10% der Bruchkraft eine Dehnung D mit D≥ 0,2 % - insbesondere mit D≥1% - aufweisen.

13. Fahrzeugluftreifen gemäß den Merkmalen von einem oder mehreren der vorangegangenen Ansprüche,
wobei die Festigkeitsträger (27) der Gürtellage (17), die in ihrer Ausrichtung den Winkel ε zur Umfangsrichtung U einschließen, Stahlkorde sind.

14. Fahrzeugluftreifen gemäß den Merkmalen von einem oder mehreren der vorangegangenen Ansprüche,
wobei die Festigkeitsträger (26,28,29) der weiteren Gürtellage (16,18,19) Stahlkorde sind.

## Claims

1. Pneumatic vehicle tyre for commercial vehicles, comprising a carcass (5), a breaker belt (9) built up radially outside the carcass (5) and a profiled tread (10) built up on the belt (9) radially outside the belt (9), wherein the belt (9) is formed from at least four belt plies (17, 14, 13, 15), which lie one on top of the other from radially the inside to radially the outside, wherein the first belt ply (13), arranged furthest inwards in the radial direction R, of the four belt plies (17, 14, 13, 15) is formed with reinforcing elements (23) embedded in rubber in a parallel manner, and the fourth belt ply (15), arranged furthest outwards in the radial direction R, is formed with reinforcing elements (25) embedded in rubber in a parallel manner, wherein there are formed between the first belt ply (13) and the fourth belt ply (15) in the radial direction at least one second belt ply (14, 17) with reinforcing elements (24, 27) embedded in rubber in a parallel manner, which is arranged on the first belt ply (13), and a third belt ply (17, 14) with reinforcing elements (27, 24) embedded in rubber in a parallel manner, which is arranged on the second belt ply (14, 17), wherein the first belt ply (13) and the fourth belt ply (15) are working plies, in which the reinforcing elements (23) of the first belt ply (13) form in their alignment an angle α in relation to the circumferential direction U where 10°≤α≤45°, and the reinforcing elements (25) of the fourth belt ply (15) form in their alignment in each case an angle γ in relation to the circumferential direction U where 10°≤γ≤45°, wherein, when seen in the circumferential direction U of the vehicle tyre, the reinforcing elements (23) of the first belt ply (13) have an axial direction of inclination opposite to the reinforcing elements (25) of the fourth belt ply (15), wherein the second or the third belt ply is a belt ply (17) of which the reinforcing elements (27) form in their alignment an angle ε in relation to the circumferential direction U where 40°≤ε≤75°, and wherein the other of the two belt plies is a belt ply (14) of which the reinforcing elements (24) form in their alignment an angle β in relation to the circumferential direction U where 0°≤β≤5°, **characterized**
**in that** arranged radially inside the radially inner working ply (13), between the working ply (13) and the carcass (5), is an additional belt ply (18) with reinforcing elements (28) embedded in rubber in a parallel manner, which form in their alignment an angle θ in relation to the circumferential direction U of the pneumatic vehicle type where 40°≤θ≤75° - in particular where θ=50° -, and wherein, when seen in particular in the circumferential direction U of the vehicle tyre, the reinforcing elements (28) of this additional belt ply (18) have an axial direction of inclination opposite to the reinforcing elements (27) of the belt ply (17), which form in their alignment the angle ε in relation to the circumferential direction U.

2. Pneumatic vehicle tyre according to the features of Claim 1 or 2,
wherein the second belt ply is that belt ply (17) of which the reinforcing elements (27) form in their alignment an angle ε in relation to the circumferential direction U where 40°≤ε≤75°, and in that the third belt ply is that belt ply (14) of which the reinforcing elements (24) form in their alignment an angle β in relation to the circumferential direction U, where 0°≤β≤5°.

3. Pneumatic vehicle tyre according to the features of Claim 2,
wherein formed radially outside the third belt ply (14), between the third belt ply and the fourth belt ply (15), is a further belt ply (19), of which the reinforcing elements (29) form in their alignment an angle (ξ) in relation to the circumferential direction U where 40°≤ξ≤75°, wherein, when seen in the circumferential direction U of the vehicle tyre, the reinforcing elements (27) of the second belt ply (17) have an axial direction of inclination opposite to the reinforcing elements (29) of the further belt ply (19).

4. Pneumatic vehicle tyre according to the features of Claim 1,
wherein the third belt ply is that belt ply (17) of which the reinforcing elements (27) form in their alignment an angle ε in relation to the circumferential direction U where 40°≤ξ≤75°, and in that the second belt ply is that belt ply (14) of which the reinforcing elements (24) form in their alignment an angle β in relation to the circumferential direction U where 0°≤β≤5°.

5. Pneumatic vehicle tyre according to the features of Claim 1,
wherein, when seen in the circumferential direction U, the reinforcing elements (23) of the first belt ply (13) and the reinforcing elements (27) of the belt ply (17), which form in their alignment the angle ε in relation to the circumferential direction U, have the same axial direction of inclination.

6. Pneumatic vehicle tyre according to the features of Claim 1,
wherein the first belt ply (13) is formed as greater in its axial extent in the pneumatic vehicle tyre than all of the other belt plies (14, 15, 17) of the breaker belt.

7. Pneumatic vehicle tyre according to the features of Claim 1,
wherein the belt ply (14) of which the reinforcing elements (24) are formed in their alignment with an angle β in relation to the circumferential direction U are formed as smaller in their axial extent than all of the other belt plies (13, 15, 17) of the breaker belt.

8. Pneumatic vehicle tyre according to the features of one of the preceding claims,
wherein arranged radially outside the radially outer working ply (15) on the outer working ply (15) there is a further additional belt ply (16), with reinforcing elements (26) embedded in rubber in a parallel manner, which form in their alignment an angle δ in relation to the circumferential direction U of the pneumatic vehicle tyre where 40°≤δ≤75° - in particular where δ=50° -, and wherein, in particular when seen in the circumferential direction U of the vehicle tyre, the reinforcing elements (26) of this additional belt ply (16) have an axial direction of inclination opposite to the reinforcing elements (27) of the belt ply (17) that form in their alignment the angle ε in relation to the circumferential direction U.

9. Pneumatic vehicle tyre according to the features of one or more of the preceding claims,
wherein the reinforcing elements (23) of the first belt ply (13) and the reinforcing elements (25) of the fourth belt ply (15) are steel cords.

10. Pneumatic vehicle tyre according to the features of one or more of the preceding claims,
wherein the reinforcing elements (23, 25) of the two belt plies formed as working plies, the first and fourth belt plies (13, 15), are formed as extensible in the tyre, with an elongation D of D≥0.2% at 10% of the breaking force.

11. Pneumatic vehicle tyre according to the features of one or more of the preceding claims,
wherein the reinforcing elements (24) of the belt ply (14), which form in their alignment the angle β in relation to the circumferential direction U, are reinforcing elements made of steel.

12. Pneumatic vehicle tyre according to the features of claim one or more of the preceding claims,
wherein the reinforcing elements (24) of the belt ply (14), which form in their alignment the angle β in relation to the circumferential direction U, are steel cords which have at 10% of the breaking force an elongation D where D≥0.2% - in particular where D≥1%.

13. Pneumatic vehicle tyre according to the features of one or more of the preceding claims,
wherein the reinforcing elements (27) of the belt ply (17), which form in their alignment the angle ε in relation to the circumferential direction U, are steel cords.

14. Pneumatic vehicle tyre according to the features of one or more of the preceding claims,
wherein the reinforcing elements (26, 28, 29) of the further belt ply (16, 18, 19) are steel cords.

## Revendications

1. Pneumatique de véhicule pour véhicule utilitaire doté d'une carcasse (5), doté d'une ceinture (9) formée radialement à l'extérieur de la carcasse (5) et d'une bande de roulement (10) profilée formée radialement à l'extérieur de la ceinture (9) sur la ceinture (9), dans lequel la ceinture (9) est réalisée à partir d'au moins quatre couches de ceinture (17, 14, 13, 15) arrangées radialement en superposition de l'intérieur vers l'extérieur, dans lequel la première couche de ceinture (13), agencée le plus loin vers l'intérieur dans la direction radiale R parmi les quatre couches de ceinture (17, 14, 13, 15), est réalisée avec des supports de résistance (23) parallèles incrustés dans le caoutchouc, et la quatrième couche de ceinture (15), agencée le plus loin vers l'extérieur dans la direction radiale R, est réalisée avec des supports de résistance (25) parallèles incrustés dans le caoutchouc, dans lequel, dans la direction radiale entre la première couche de ceinture (13) et la quatrième couche de ceinture (15), au moins une deuxième couche de ceinture (14, 17), laquelle est agencée sur la première couche de ceinture (13), est réalisée avec des supports de résistance (24, 27) parallèles incrustés dans le caoutchouc et une troisième couche de ceinture (17, 14), laquelle est agencée sur la deuxième couche de ceinture (14, 17), est réalisée avec des supports de résistance (27, 24) parallèles incrustés dans le caoutchouc,
dans lequel la première couche de ceinture (13) et la quatrième couche de ceinture (15) sont des couches de travail, pour lesquelles les supports de résistance (23) de la première couche de ceinture (13) forment dans leur orientation un angle α par rapport à la direction circonférentielle U avec 10° ≤ α ≤ 45° et les supports de résistance (25) de la quatrième couche de ceinture (15) forment respectivement dans leur orientation un angle γ par rapport à la direction circonférentielle U avec 10° ≤ γ ≤ 45°, dans lequel en regardant dans la direction circonférentielle U du pneumatique de véhicule, les supports de résistance (23) de la première couche de ceinture (13) comportent une direction d'inclinaison axiale opposée aux supports de résistance (25) de la quatrième couche de ceinture (15), dans lequel la deuxième ou la troisième couche de ceinture est une couche de ceinture (17) dont les supports de résistance (27) forment dans leur orientation un angle ε par rapport à la direction circonférentielle U avec 40° ≤ ε ≤ 75°, et dans lequel l'autre des deux couches de ceinture est une couche de ceinture (14) dont les supports de résistance (24) forment dans leur orientation un angle β par rapport à la direction circonférentielle U avec 0° ≤ β ≤ 5°, **caractérisé en ce**
**qu'**une couche de ceinture supplémentaire (18) est agencée radialement à l'intérieur de la couche de travail (13) radialement intérieure entre la couche de travail (13) et la carcasse (5), avec des supports de résistance (28) parallèles incrustés dans le caoutchouc, formant dans leur orientation un angle θ par rapport à la direction circonférentielle U du pneumatique avec 40° ≤ θ ≤ 75° - en particulier θ = 50° - et dans lequel en particulier en regardant dans la direction circonférentielle U du pneumatique de véhicule, les supports de résistance (28) de cette couche de ceinture supplémentaire (18) comportent une direction d'inclinaison axiale opposée aux supports de résistance (27) de la couche de ceinture (17) formant dans leur orientation l'angle ε par rapport à la direction circonférentielle U.

2. Pneumatique de véhicule selon les caractéristiques de la revendication 1 ou 2, dans lequel la deuxième couche de ceinture est la couche de ceinture (17) dont les supports de résistance (27) forment dans leur orientation un angle ε par rapport à la direction circonférentielle U avec 40° ≤ ε ≤ 75°, et en ce que la troisième couche de ceinture est la couche de ceinture (14) dont les supports de résistance (24) forment dans leur orientation un angle β par rapport à la direction circonférentielle U avec 0° ≤ β ≤ 5°.

3. Pneumatique de véhicule selon les caractéristiques de la revendication 2, dans lequel une couche de ceinture supplémentaire (19) est réalisée radialement à l'extérieur de la troisième couche de ceinture (14) entre la troisième et la quatrième couche de ceinture (15), dont les supports de résistance (29) forment dans leur orientation un angle (ζ) par rapport à la direction circonférentielle U avec 40° ≤ ζ ≤ 75°, dans lequel en regardant dans la direction circonférentielle U du pneumatique de véhicule, les supports de résistance (27) de la deuxième couche de ceinture (17) comportent une direction d'inclinaison axiale opposée aux supports de résistance (29) de la couche de ceinture supplémentaire (19).

4. Pneumatique de véhicule selon les caractéristiques de la revendication 1, dans lequel la troisième couche de ceinture est la couche de ceinture (17) dont les supports de résistance (27) forment dans leur orientation un angle ε par rapport à la direction circonférentielle U avec 40° ≤ ε ≤ 75°, et en ce que la deuxième couche de ceinture est la couche de ceinture (14) dont les supports de résistance (24) forment dans leur orientation un angle β par rapport à la direction circonférentielle U avec 0° ≤ β ≤ 5°.

5. Pneumatique de véhicule selon les caractéristiques de la revendication 1, dans lequel, en regardant dans la direction circonférentielle U, les supports de résistance (23) de la première couche de ceinture (13) et les supports de résistance (27) de la couche de ceinture (17) formant dans leur orientation l'angle ε par rapport à la direction circonférentielle U comportent la même direction d'inclinaison axiale.

6. Pneumatique de véhicule selon les caractéristiques de la revendication 1, dans lequel la première couche de ceinture (13) est réalisée, dans son étendue axiale dans le pneumatique, de manière à être plus grande que toutes les autres couches de ceinture (14, 15, 17) de la ceinture.

7. Pneumatique de véhicule selon les caractéristiques de la revendication 1, dans lequel la couche de ceinture (14) dont les supports de résistance (24) sont orientés dans leur orientation avec un angle β par rapport à la direction circonférentielle U, est réalisée dans son étendue axiale de manière à être plus petite que toutes les autres couches de ceinture (13, 15, 17) de la ceinture.

8. Pneumatique de véhicule selon les caractéristiques d'une des revendications précédentes,
dans lequel une couche de ceinture supplémentaire (16) est agencée radialement à l'extérieur de la couche de travail (15) radialement extérieure sur la couche de travail extérieure (15), avec des supports de résistance (26) parallèles incrustés dans le caoutchouc, formant dans leur orientation un angle δ par rapport à la direction circonférentielle U du pneumatique avec 40° ≤ δ ≤ 75° - en particulier δ = 50° - et dans lequel en particulier en regardant dans la direction circonférentielle U du pneumatique de véhicule, les supports de résistance (26) de cette couche de ceinture supplémentaire (16) comportent une direction d'inclinaison axiale opposée aux supports de résistance (27) de la couche de ceinture (17) formant dans leur orientation l'angle ε par rapport à la direction circonférentielle U.

9. Pneumatique de véhicule selon les caractéristiques d'une ou de plusieurs des revendications précédentes, dans lequel les supports de résistance (23) de la première couche de ceinture (13) et les supports de résistance (25) de la quatrième couche de ceinture (15) sont des câbles d'acier.

10. Pneumatique de véhicule selon les caractéristiques d'une ou de plusieurs des revendications précédentes, dans lequel les supports de résistance (23, 25) des première et quatrième couches de ceinture (13, 15) réalisées toutes les deux comme couches de travail sont réalisés comme élastiques dans le pneumatique avec un allongement D de D ≥ 0,2 % à 10 % de la force de rupture.

11. Pneumatique de véhicule selon les caractéristiques d'une ou de plusieurs des revendications précédentes, dans lequel les supports de résistance (24) de la couche de ceinture (14) formant dans leur orientation l'angle β par rapport à la direction circonférentielle U sont des supports de résistance en acier.

12. Pneumatique de véhicule selon les caractéristiques de la revendication une ou plusieurs des revendications précédentes,
dans lequel les supports de résistance (24) de la couche de ceinture (14) formant dans leur orientation l'angle β par rapport à la direction circonférentielle U sont des câbles en acier, possédant un allongement D avec D ≥ 0,2 % - en particulier avec D ≥ 1 % - à 10 % de la force de rupture.

13. Pneumatique de véhicule selon les caractéristiques d'une ou de plusieurs des revendications précédentes, dans lequel les supports de résistance (27) de la couche de ceinture (17) formant dans leur orientation l'angle ε par rapport à la direction circonférentielle U sont des câbles en acier.

14. Pneumatique de véhicule selon les caractéristiques d'une ou de plusieurs des revendications précédentes, dans lequel les supports de résistance (26, 28, 29) des couches de ceinture (16, 18, 19) sont des câbles en acier.
